# EUROPÄISCHE PATENTSCHRIFT

(11) **EP 1 853 445 B1**
(45) Veröffentlichungstag und Bekanntmachung des Hinweises auf die Patenterteilung: **08.05.2013**
(21) Anmeldenummer: 06722544.1
(22) Anmeldetag: 02.03.2006
(51) Int. Cl.: B60J 1/02

(54) **FAHRZEUGAUFBAU**
VEHICLE BODY
CARROSSERIE DE VEHICULE

(30) Priorität: 03.03.2005 DE 102005009816
(43) Veröffentlichungstag der Anmeldung: 14.11.2007
(73) Patentinhaber: Webasto SE, 82131 Stockdorf (DE)
(72) Erfinder: WULF, Friedhelm, 91325 Adelshof/Aisch (DE); RUDOLPH, Thomas, 82229 Hechendorf (DE); GERL, Tobias, 80805 München (DE); GLASL, Sebastian, 81827 München (DE); OBERHAUS, Peter, 82396 Paehl (DE)
(74) Vertreter: Richter, Matthias
(86) Internationale Anmeldenummer: PCT/DE2006/000374
(87) Internationale Veröffentlichungsnummer: WO 2006/092128

(56) Entgegenhaltungen:
- EP-A- 0 963 870
- DE-A1- 19 701 682
- DE-A1- 19 711 333
- US-A- 2 772 915
- US-A- 5 803 527

## Beschreibung

Die Erfindung betrifft einen Fahrzeugaufbau nach dem Oberbegriff des Patentanspruchs 1, siehe zum Beispiel DE-A-197 11 333.

Ein derartiger Fahrzeugaufbau ist aus der Praxis bekannt und umfasst ein beispielsweise als Windschutzscheibe ausgebildetes Scheibenelement und ein Dachpaneel, das aus transparentem Polycarbonat gebildet ist, so dass für Fahrzeuginsassen ein großer Durchsichtsbereich nach vorne und nach oben zur Verfügung steht. Im Übergangsbereich zwischen dem Scheibenelement und dem Dachpaneel ist ein als Windlauf bzw. Spriegel ausgebildeter Querträger angeordnet, der Bestandteil eines Dachrahmens ist, in welchen das Dachpaneel eingepasst ist. Der Querträger hat in der Regel einen zweischaligen Aufbau, wobei er zumeist wesentlich zur Steifigkeit des Dachrahmens beiträgt. Aus statischen Gründen hat der Querträger eine Breite, die eine Einschränkung des Durchsichtsbereichs im vorderen Dachbereich darstellt. Das Scheibenelement und das Dachpaneel sind jeweils über eine Kleberaupe an dem Querträger fixiert. Aus ästhetischen Gründen ist der Querträger häufig zum Fahrzeuginnenraum hin mit einem Verkleidungselement versehen.

Des Weiteren ist aus der Praxis ein Fahrzeugaufbau bekannt, der ohne vorderen Windlauf auskommt und bei dem eine aus Sicherheitsverbundglas gefertigte Windschutzscheibe bis in den Dachbereich des Fahrzeugs hineinreicht. Dieser Fahrzeugaufbau bietet zwar für Fahrzeuginsassen auf den Vordersitzen eine im Wesentlichen freie Sicht nach oben. Da der vordere Dachbereich jedoch besonders anfällig für Steinschlag ist, besteht hier ein hohes Risiko eines Glasbruches.

Der Erfindung liegt die Aufgabe zugrunde, einen Fahrzeugaufbau der einleitenden genannten Gattung zu schaffen, der im Bereich des Übergangs zwischen einem Karosseriepaneel und dem Scheibenelement gegenüber dem Stand der Technik mit einem geringen Bauteilaufwand mit einem verbesserten Erscheinungsbild versehen werden kann, wobei in dem Übergangsbereich bei Bedarf gleichzeitig eine hohe Steifigkeit bereitgestellt werden kann.

Diese Aufgabe ist erfindungsgemäß durch den Fahrzeugaufbau mit den Merkmalen des Patentanspruchs 1 gelöst.

Der Kern der Erfindung liegt mithin darin, das Scheibenelement und das Karosseriepaneel an den Querträger anzuschäumen, wobei die hierzu genutzte Schaumstruktur in einfacher Weise durch entsprechende Auslegung des eingesetzten Schäum- bzw. Formwerkzeugs den geometrischen und ästhetischen Anforderungen angepasst werden kann, so dass insbesondere im Übergangsbereich zwischen dem Scheibenelement und dem Karosseriepaneel ein im Wesentlichen nahtloser Übergang geschaffen werden kann. Im von der Fahrzeugaußenseite sichtbaren Bereich kann eine durchgehende, im Wesentlichen übergangsfreie stetige Fläche ausgebildet sein. Eine Nachgiebigkeit des Werkstoffs der Schaumstruktur kann zur Aufnahme von Bauteildehnungen infolge von Temperaturänderungen oder unterschiedlicher mechanischer Belastungen ausgenutzt werden. Verformungen der Werkstoffe des Scheibenelementes und des Karosseriepaneels können also von der Schaumstruktur aufgenommen bzw. ausgeglichen werden. Dies ist insbesondere vorteilhaft, wenn das Scheibenelement und das Karosseriepaneel aus unterschiedlichen Werkstoffen gefertigt sind, die ein unterschiedliches Temperaturverhalten aufweisen.

Die Schaumstruktur bildet insbesondere eine Fläche an der Fahrzeugaußenseite im Übergangsbereich zwischen dem Scheibenelement und dem Karosseriepaneel, wenn sie eine Fuge bzw. einen Spalt zwischen dem Scheibenelement und dem Karosseriepaneel ausfüllt. Die an der Fahrzeugaußenseite ausgebildete Fläche ist vorzugsweise an die Formgebung des Scheibenelements und des Karosseriepaneels angepasst, so dass zwischen diesen beiden Bauteilen ein gleichmäßiger bzw. stetiger Übergang hergestellt ist. Die von der Schaumstruktur gebildete Fläche kann eben sein oder auch bei speziellen Ausführungsformen mit einer Unter- oder Überwölbung ausgeführt sein. Die Form der Fläche wird durch das eingesetzte Formwerkzeug vorgegeben.

Um dem Querträger im Bereich des Fahrzeuginnenraums allein durch die Ausbildung der Schaumstruktur ein besonders vorteilhaftes Erscheinungsbild zu verleihen, ist bei einer bevorzugten Ausführungsform des Fahrzeugsaufbaus nach der Erfindung die Schaumstruktur so ausgebildet, dass sie den Querträger vollständig umhüllt. Auf ein zusätzliches Verkleidungselement kann in diesem Fall in der Regel verzichtet werden.

Als Werkstoff für die Schaumstruktur kann beispielsweise ein Polyurethanschaum eingesetzt werden, der vorzugsweise elastisch verformbar ist.

Eine bevorzugte Ausführungsform liegt vor, wenn der Querträger aus einem Kunststoffhohlprofil gebildet ist. Die Geometrie des Kunststoffhohlprofils kann entsprechend den jeweils gestellten Anforderungen mit der gewünschten Steifigkeit ausgelegt bzw. verstärkt werden.

Der Querträger kann aber auch ein Metallhohlprofil sein, das insbesondere als Hydroformteil bzw. als ein nach einem Innenhochdruckumformverfahren hergestelltes Bauteil ausgebildet ist.

Der Querträger kann ein so genannter Windlauf im vorderen Dachbereich eines Kraftfahrzeugs sein. Das Scheibenelement bildet dann eine Windschutzscheibe und das Karosseriepaneel bildet ein Dachpaneel, das Funktionselemente wie ein Schiebedach, Innenbeleuchtungseinrichtungen und/oder dergleichen aufnehmen kann. Der Querträger kann, wenn die Steifigkeit des Dachbereichs im Wesentlichen durch andere Bauteile vorgegeben wird, mit geringen Querabmessungen ausgebildet sein, so dass der Querträger bei einem transparenten Dachpaneel nur eine geringe Einschränkung des Sichtbereichs für die Fahrzeuginsassen bewirkt. Auch besteht durch die erfindungsgemäße Ausgestaltung im Vergleich zu der bekannten Lösung mit einer sich in den Dachbereich erstreckenden Windschutzscheibe eine große Gestaltungsfreiheit für das Dachpaneel.

Im Gegensatz zu einer Lösung ohne Windlauf sind bei dem erfindungsgemäßen Fahrzeugaufbau die Steifigkeitsverluste minimiert. Auch liefert die erfindungsgemäße Ausgestaltung eine Erhöhung der Sicherheit bei einem Seitenaufprall oder einem Überschlag im Vergleich zu einer Lösung ohne Windlauf, bei der sich die Windschutzscheibe bis in den Dachbereich erstreckt.

Zur Erhöhung der Steifigkeit kann das Kunststoffhohlprofil des Weiteren mit einem Strukturschaum ausgefüllt sein, d.h. strukturverstärkt und damit hochfest ausgebildet sein.

Das Scheibenelement ist, wie üblich bei einem Kraftfahrzeug, vorzugsweise aus einem Sicherheitsverbundglas und das Karosseriepaneel ist vorzugsweise aus Polycarbonat, insbesondere einem transparenten Polycarbonat gefertigt. Die Fertigung eines Dachpaneels aus Polycarbonat verringert das Risiko einer Beschädigung durch Steinschlag insbesondere in dem besonders gefährdeten vorderen Dachbereich.

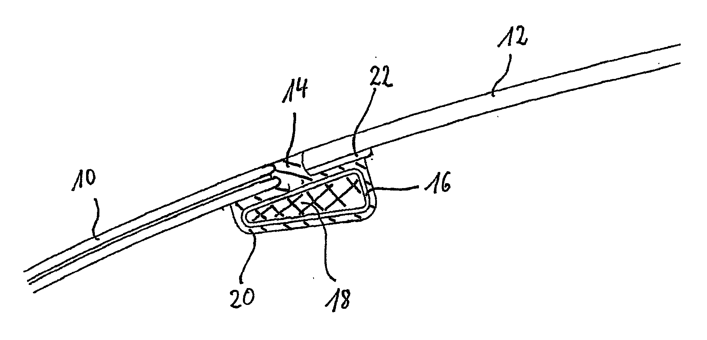

Weitere Vorteile und vorteilhafte Ausgestaltungen des Gegenstands nach der Erfindung sind der Beschreibung, der Zeichnung und den Patentansprüchen entnehmbar.

Ein Ausführungsbeispiel eines erfindungsgemäß ausgebildeten Fahrzeugaufbaus ist in der Zeichnung schematisch vereinfacht dargestellt und wird in der nachfolgenden Beschreibung näher erläutert.

Die einzige Figur zeigt einen Schnitt durch einen Übergangsbereich zwischen einer Windschutzscheibe und einem Dach eines Kraftfahrzeugs.

In der Figur der Zeichnung ist der Übergangsbereich zwischen einem in diesem Falle als Windschutzscheibe dienenden Scheibenelement 10 aus Verbundsicherheitsglas und einem Dachpaneel 12 dargestellt, das im vorliegenden Fall aus transparentem Polycarbonat gefertigt ist. Das Scheibenelement 10 und das Dachpaneel 12 sind durch eine Fuge 14 mit einer Breite von wenigen Millimetern voneinander getrennt.

Im Bereich der Fuge 14 ist ein sich in Fahrzeugquerrichtung erstreckender Querträger 16 angeordnet, der aus einem Kunststoffhohlprofil gebildet ist und als sogenannter Windlauf dient. Die Herstellung des Querträgers 16 erfolgt beispielsweise nach einem Strangpressverfahren oder dergleichen. Im Anschluss daran erfolgt eine Einbringung eines Strukturschaums 18, der zur Erhöhung der Steifigkeit den Innenraum des Querträgers 16 ausfüllt.

Das Scheibenelement 10 und das Dachpaneel 12 sind über eine Schaumstruktur 20 an dem Querträger 16 angeschäumt. Die Schaumstruktur 20 ist aus einem Polyurethanwerkstoff gebildet und bildet neben einem Fixierelement für das Scheibenelement 10 und das Dachpaneel 12 eine Umhüllung für den Querträger 16 sowie eine Fugenabdeckung- bzw. -ausfüllung für die zwischen dem Scheibenelement 10 und dem Dachpaneel 12 vorliegende Fuge 14. Zum Fahrzeuginnenraum hin bildet die Schaustruktur die Sichtfläche. Insbesondere im Bereich der Fuge 14 kann der Werkstoff der Schaumstruktur 20 Bauteildehnungen aufgrund eines unterschiedlichen Temperaturverhaltens des Scheibenelementes 10 und des Dachpaneels 12 aufnehmen.

Das Weiteren ist im Bereich der Schaumstruktur 20 an der Unterseite des Dachpaneels 12 eine opake Polycarbonatschicht 22 angespritzt und an der Unterseite des Scheibenelementes 10 eine hier nicht näher dargestellte schwarze Glasfritte angeordnet. Die Glasfritte und die Polycarbonatschicht 22 verleihen dem Übergangsbereich zwischen dem Scheibenelement 10 und dem Dachpaneel 12 von der Fahrzeugaußenseite aus eine erhöhte optische Homogenität.

Der Querträger 16 ist so schmal ausgeführt, dass der Übergangsbereich zwischen dem Scheibenelement 10 und dem Dachpaneel 14 eine Breite von etwa 30 mm und eine Höhe von etwa 20 mm hat.

### Bezugszeichen

| | |
|---|---|
| 10 | Scheibenelement |
| 12 | Dachpaneel |
| 14 | Fuge |
| 16 | Querträger |
| 18 | Strukturschaum |
| 20 | Schaumstruktur |
| 22 | Polycarbonatschicht |

## Patentansprüche

1. Fahrzeugaufbau, umfassend ein Scheibenelement (10), ein Karosseriepaneel, insbesondere ein Dachpaneel (12), und einen Querträger (16) im Übergangsbereich zwischen dem Scheibenelement (10) und dem Karosseriepaneel (12), wobei das Scheibenelement (10) und das Karosseriepaneel (12) an einer Oberseite des Querträgers (16) fixiert sind, **dadurch gekennzeichnet, dass** das Scheibenelement (10) und das Karosseriepaneel (12) über eine gemeinsame Schaumstruktur an dem Querträger (16) fixiert sind.

2. Fahrzeugaufbau nach Anspruch 1, **dadurch gekennzeichnet, dass** die Schaumstruktur (20) eine Fuge (14) zwischen dem Scheibenelement und dem Karosseriepaneel (12) ausfüllt.

3. Fahrzeugaufbau nach Anspruch 1 oder 2, **dadurch gekennzeichnet, dass** die Schaumstruktur (20) den Querträger (16) umhüllt.

4. Fahrzeugaufbau nach einem der Ansprüche 1 bis 3, **dadurch gekennzeichnet, dass** die Schaumstruktur (20) aus Polyurethanschaum gebildet ist.

5. Fahrzeugaufbau nach einem der Ansprüche 1 bis 4, **dadurch gekennzeichnet, dass** der Querträger (16) aus einem Hohlprofil, insbesondere einem Kunststoffhohlprofil gebildet ist.

6. Fahrzeugaufbau nach Anspruch 5, **dadurch gekennzeichnet, dass** das Hohlprofil ein Hydroformteil ist.

7. Fahrzeugaufbau nach Anspruch 5 oder 6, **dadurch gekennzeichnet, dass** das Kunststoffhohlprofil (16) mit einem Strukturschaum (18) ausgefüllt ist.

8. Fahrzeugaufbau nach einem der Ansprüche 1 bis 7, **dadurch gekennzeichnet, dass** das Scheibenelement (10) aus Verbundsicherheitsglas und das Karosseriepaneel (12) aus Polycarbonat, insbesondere aus transparentem Polycarbonat gefertigt ist.

## Claims

1. Vehicle body, comprising a window element (10), a bodywork panel, in particular a roof panel (12), and a cross member (16) in the transition region between the window element (10) and the bodywork panel (12), wherein the window element (10) and the bodywork panel (12) are fixed on an upper side of the cross member (16), **characterized in that** the window element (10) and the bodywork panel (12) are fixed on the cross member (16) via a common foam structure.

2. Vehicle body according to Claim 1, **characterized in that** the foam structure (20) fills a joint (14) between the window element and the bodywork panel (12).

3. Vehicle body according to Claim 1 or 2, **characterized in that** the foam structure (20) encases the cross member (16).

4. Vehicle body according to one of Claims 1 to 3, **characterized in that** the foam structure (20) is formed from polyurethane foam.

5. Vehicle body according to one of Claims 1 to 4, **characterized in that** the cross member (16) is formed from a hollow profile, in particular a plastics hollow profile.

6. Vehicle body according to Claim 5, **characterized in that** the hollow profile is a hydroformed component.

7. Vehicle body according to Claim 5 or 6, **characterized in that** the plastics hollow profile (16) is filled with a structural foam (18).

8. Vehicle body according to one of Claims 1 to 7, **characterized in that** the window element (10) is manufactured from laminated glass and the bodywork panel (12) is manufactured from polycarbonate, in particular from transparent polycarbonate.

## Revendications

1. Carrosserie de véhicule, comprenant un élément de vitre (10), un panneau de carrosserie, en particulier un panneau de toit (12), et une traverse (16) dans la zone de transition entre l'élément de vitre (10) et le panneau de carrosserie (12), dans laquelle l'élément de vitre (10) et le panneau de carrosserie (12) sont fixés à un côté supérieur de la traverse (16), **caractérisée en ce que** l'élément de vitre (10) et le panneau de carrosserie (12) sont fixés à la traverse (16) au moyen d'une structure cellulaire commune.

2. Carrosserie de véhicule selon la revendication 1, **caractérisée en ce que** la structure cellulaire (20) remplit un joint (14) entre l'élément de vitre et le panneau de carrosserie (12).

3. Carrosserie de véhicule selon la revendication 1 ou 2, **caractérisée en ce que** la structure cellulaire (20) enveloppe la traverse (16).

4. Carrosserie de véhicule selon l'une quelconque des revendications 1 à 3, **caractérisée en ce que** la structure cellulaire (20) est formée de mousse de polyuréthane.

5. Carrosserie de véhicule selon l'une quelconque des revendications 1 à 4, **caractérisée en ce que** la traverse (16) est formée par un profilé creux, en particulier un profilé creux en matière plastique.

6. Carrosserie de véhicule selon la revendication 5, **caractérisée en ce que** le profilé creux est une pièce d'hydroformage.

7. Carrosserie de véhicule selon la revendication 5 ou 6, **caractérisée en ce que** le profilé creux en matière plastique (16) est rempli d'une mousse de structure (18).

8. Carrosserie de véhicule selon l'une quelconque des revendications 1 à 7, **caractérisée en ce que** l'élément de vitre (10) est fabriqué à partir de verre de sécurité feuilleté et le panneau de carrosserie (12) est fabriqué en polycarbonate, en particulier en polycarbonate transparent.
